# EUROPEAN PATENT APPLICATION

(11) **EP 2 827 434 A1**
(43) Date of publication of application: **21.01.2015**
(21) Application number: 12871415.1
(22) Date of filing: 13.03.2012
(51) Int. Cl.: H01M 10/058, H01M 2/12, H01M 2/36, H01M 10/0566

(54) **BATTERY MANUFACTURING METHOD**

(71) Applicant: Kabushiki Kaisha Toshiba, Minato-ku Tokyo 105-8001 (JP)
(72) Inventor: TAKENOUCHI, Yoshio, Tokyo 105-8001 (JP); TAKAHASHI, Kenichi, Tokyo 105-8001 (JP); EGUSA, Shun, Tokyo 105-8001 (JP)
(74) Representative: Hoffmann Eitle
(86) International application number: PCT/JP2012/056422
(87) International publication number: WO 2013/136445

(57) **Abstract**

According to one embodiment, a method for producing a battery, includes an injecting, a first sealing, a subjecting to processing including a charge, a releasing gas and a second sealing. In the injecting, an electrolytic solution is injected into a package member including an electrode through an injection port opened in the package member. In the first sealing, the injection port is sealed. In the releasing gas, a vent hole in the package member is opened to release gas contained in the package member from the vent hole. In the second sealing, the vent hole is sealed.

## Description

### Technical Field

Embodiments of the present invention relate to a method for producing a battery.

### Background Art

Chargeable and dischargeable nonaqueous electrolyte batteries having a rectangular parallelopiped form, for example, lithium ion batteries are primarily used for power sources of electric vehicles such as electric vehicles and plug-in electric vehicles which have recently made rapid progress. The lithium ion battery has a structure in which an electrode group obtained by winding or laminating positive and negative electrodes with a separator being interposed therebetween and a nonaqueous electrolyte are accommodated in a case which is made of aluminum or an aluminum alloy and has a rectangular parallelopiped form.

Nonaqueous electrolyte batteries such as lithium ion batteries have the problem that water inevitably enters into the battery in the production process and therefore, the internal pressure in the battery case is raised by gas generated by decomposition of water.

### Citation List

### Patent Literature

Patent Literature 1: Jpn. Pat. Appln. KOKAI Publication No. 2006-331828
Patent Literature 2: Jpn. Pat. Appln. KOKAI Publication No. 2007-59145

### Summary of Invention

### Technical Problem

It is an object of the present invention to provide a method for producing a battery enabling the package member to be limited in swelling.

### Solution to Problem

According to an embodiment, there is provided a method for producing a battery, the method including an injecting, a first sealing, a subjecting to processing including a charge, a releasing gas and a second sealing. In the injecting, an electrolytic solution is injected into a package member including an electrode through an injection port opened in the package member. In the first sealing, the injection port is sealed. In the releasing gas, a vent hole in the package member is opened to release gas contained in the package member from the vent hole. In the second sealing, the vent hole is sealed.

### Brief Description of Drawings

FIG. 1 is an exploded perspective view of a battery according to an embodiment;
FIG. 2 is a partially exploded perspective view of a battery shown in FIG. 1 as viewed from below;
FIG. 3 is a partially exploded perspective view of an electrode group used in a battery shown in FIG. 1;
FIG. 4 is a plan view of a battery shown in FIG. 1;
FIG. 5 is a sectional view showing a gas releasing step in a battery shown in FIG. 1;
FIG. 6 is a sectional view showing a second sealing step in a battery shown in FIG. 1;
FIG. 7 is a perspective view of a battery produced by a method according to an embodiment; and
FIG. 8 is a plan view of a battery according to an embodiment.

### Description of Embodiments

Embodiments will be explained with reference to the drawings.

### (Embodiment)

A method for producing a battery according to an embodiment includes an electrolytic solution injection step, a first sealing step, a step including a charge, a gas releasing step, and a second sealing step.

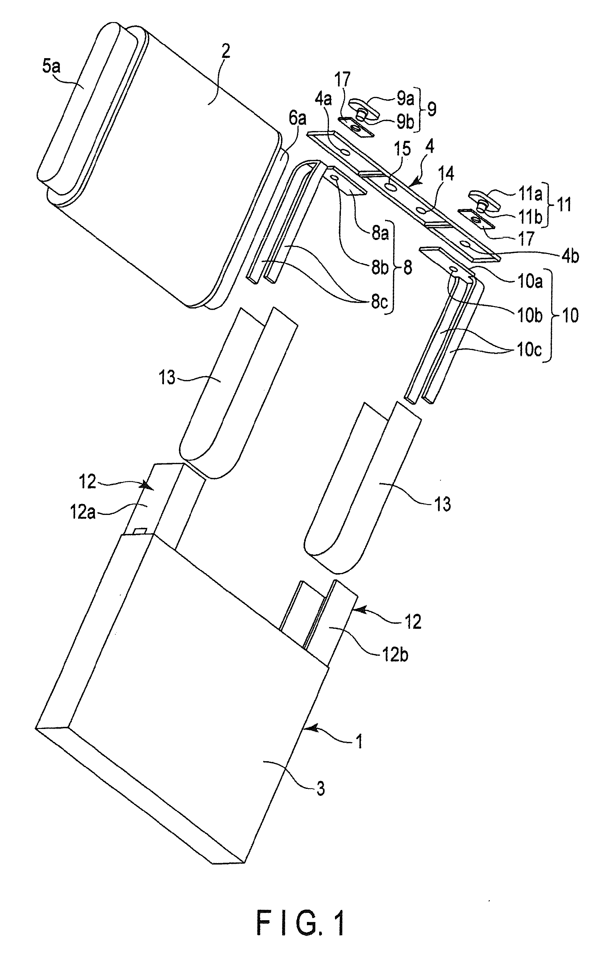

An example of a battery which has been treated in the electrolytic solution injection step and first sealing step is shown in FIGS. 1 to 4. The battery shown in FIGS. 1 to 4 is to be a sealed and prismatic type nonaqueous electrolyte battery through the step including the charge, gas releasing step, and second sealing step. The battery comprises a package member 1, a flat type electrode group 2 accommodated in the package member 1, and a nonaqueous electrolytic solution (not shown) with which the flat type electrode group 2 is impregnated. The package member 1 includes a prismatic cylinder type container 3 with bottom and a seal plate 4 secured to an open part of the container 3 by, for example, welding.

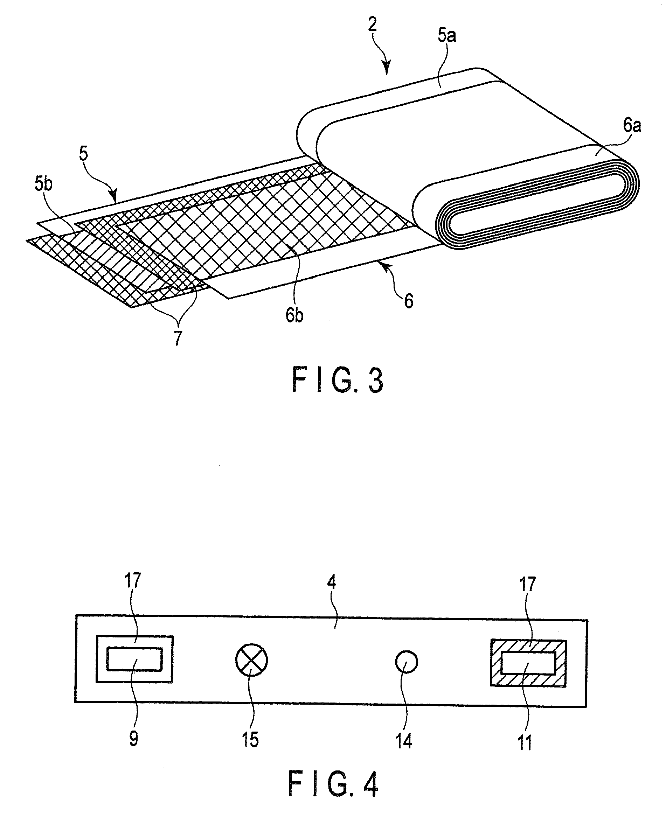

As shown in FIG. 3, the flat type electrode group 2 is produced by winding a positive electrode 5 and a negative electrode 6 with a separator 7 being interposed therebetween in a flat shape. The positive electrode 5 includes a strip-shaped positive electrode current collector made of, for example, a metal foil, a positive electrode current collector tab 5a constituting one end part parallel to the long side of the positive electrode current collector, and a positive electrode active material layer 5b formed on the positive electrode current collector except for at least the positive electrode current collector tab 5a.
On the other hand, the negative electrode 6 includes a strip-shaped negative electrode current collector made of, for example, a metal foil, a negative electrode current collector tab 6a constituting one end part parallel to the long side of the negative electrode current collector, and a negative electrode active material layer 6b formed on the negative electrode current collector except for at least the negative electrode current collector tab 6a.

These positive electrode 5, separator 7, and negative electrode 6 are wound with the positive electrode 5 and the negative electrode 6 positionally deviated such that the positive electrode current collector tab 5a is projected from the separator 7 in the winding axial direction of the electrode group and the negative electrode current collector tab 6a is projected from the separator 7 in the opposite direction. Such a coil structure ensures the formation of the electrode group 2 in which, as shown in FIG. 3, the spirally coiled positive electrode current collector tab 5a is projected from one end surface and the spirally coiled negative electrode current collector tab 6a is projected from other end surface.

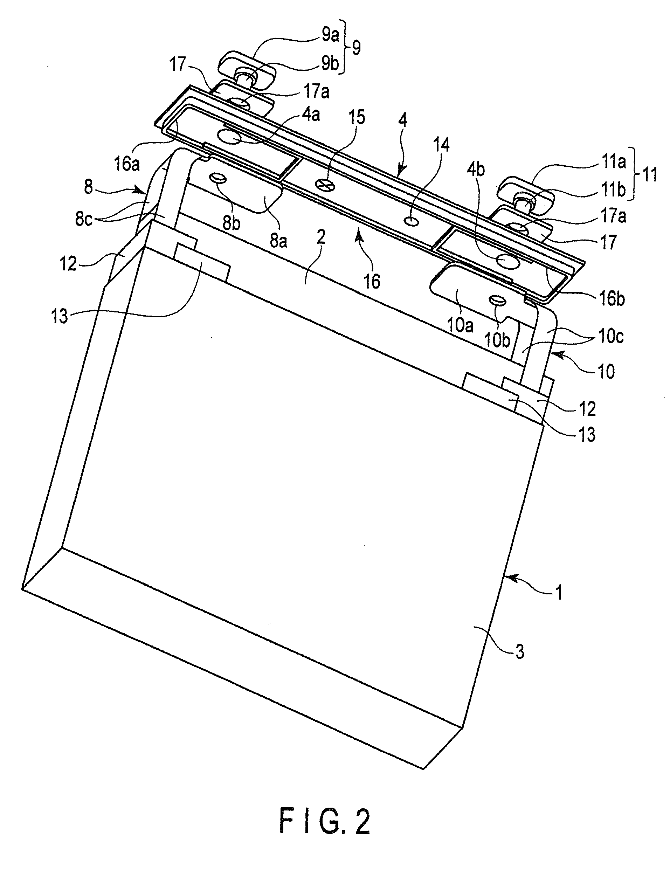

As shown in FIGS. 1 and 2, a positive electrode lead 8 includes a connecting plate 8a for electrically connecting with a positive electrode terminal 9, a through-hole 8b opened in the connecting plate 8a, and a strip current collecting portion 8c which forks into two branches extended downward. The current collecting portion 8c of the positive electrode lead 8 sandwiches the positive electrode current collector tab 5a of the electrode group 2 between these two branches and is electrically connected with the positive electrode current collector tab 5a by welding. On the other hand, a negative electrode lead 10 includes a connecting plate 10a for electrically connecting with a negative electrode terminal 11, a through-hole 10b opened in the connecting plate 10a, and a strip current collecting portion 10c which forks into two branches extended downward. The current collecting portion 10c of the negative electrode lead 10 sandwiches the negative electrode current collector tab 6a of the electrode group 2 between these two branches and is electrically connected with the negative electrode current collector tab 6a by welding. Examples of a method of electrically connecting the positive and negative electrode leads 8 and 10 to the positive and negative electrode current collector tabs 5a and 6a respectively include, though not particularly limited to, welding such as ultrasonic welding and laser welding.

An electric guard 12 includes a side plate 12a covering the end surfaces of the positive and negative electrode current collector tabs 5a and 6a and a side plate 12b bent like U-shape so as to cover the outermost periphery of the positive and negative current collector tabs 5a and 6a. The upper end of the electrode guard 12 is opened to accommodate the electrode group 2 to be introduced therefrom. The positive electrode current collector tab 5a of the electrode group 2 and the current collecting portion 8c of the positive electrode lead 8 welded to the positive electrode current collector tab 5a are covered with the electrode guard 12. The connecting plate 8a of the positive electrode lead 8 is positioned above the electrode guard 12. On the other hand, the negative electrode current collector tab 6a of the electrode group 2 and the current collecting portion 10c of the negative electrode lead 10 are covered with the electrode guard 12. The connecting plate 10a of the negative electrode lead 10 is positioned above the electrode guard 12. These two electrode guards 12 are secured to the electrode group 2 by an insulation tape 13.

As shown in FIGS 1 and 2, the seal plate 4 has a rectangular plate form. The seal plate 4 includes through-holes 4a and 4b to fit up the positive and negative electrode terminals 9 and 11. Further, the seal plate 4 includes a liquid injection port and a thin wall portion 15 where the plate thickness is lower. The liquid injection port is sealed with a first seal lid 14 after the electrolytic solution is injected therethrough. The first seal lid 14 has a disk form. The first seal lid 14 is secured to the surface of the seal plate 4 by, for example, welding. FIG. 4 shows a plan view of the seal plate 4 to which the first seal lid 14 is set. In FIG. 4, a member represented by the symbol 15 is the thin wall portion. The thin wall portion 15 includes a cross-shaped groove in a circular region thinner than the plate thickness of the seal plate 4. In this case, a cross-shaped groove may not be present. Further, the shape of the region thinner than the plate thickness of the seal plate 4 is not limited to a circular shape but may be a polygonal shape such as a triangle or square or ellipse. The first seal lid 14 is formed of a metal such as aluminum or an aluminum foil. Further, the first seal lid 14 is not limited to a disk form but may be changed corresponding to the shape of the liquid injection port.

As shown in FIGS 1 and 2, the insulation plate 16 includes a recessed portion 16a at one end thereof and a recessed portion 16b at the other end. The connecting plate 8a of the positive electrode lead 8 is accommodated in the recessed portion 16a. The connecting plate 10a of the negative electrode lead 10 is accommodated in the recessed portion 16b. A portion placed between the recessed portion 16a and recessed portion 16b is opened and the backside of the seal plate 4 is exposed through the opened portion. Further, the recessed portion 16a and recessed portion 16b of the insulation plate 16 have through-holes communicated with through-holes 4a and 4b of the seal plate 4 respectively. The insulation plate 16 is disposed on the backside of the seal plate 4.

The positive and negative electrodes 9 and 11 include projection portions 9a and 11a each having a rectangular plate form and shaft portions 9b and 11b extended from the projection portions 9a and 11a respectively. Further, insulation gaskets 17 include through-holes 17a into which the shaft portions 9b and 11b of the positive and negative electrode terminals 9 and 11 are inserted respectively. The shaft portion 9b of the positive electrode terminal 9 is inserted into the through-hole 17a of the insulation gasket 17, through-hole 4a of the seal plate 4, through-hole of the insulation plate 16 and through-hole 8b of the connecting plate 8a of the positive electrode lead 8 and secured to these members by caulking. The positive electrode terminal 9 is thereby electrically connected with the positive electrode current collector tab 5a through the positive electrode lead 8. On the other hand, the shaft portion 11b of the negative electrode terminal 11 is inserted into the through-hole 17a of the insulation gasket 17, through-hole 4b of the seal plate 4, through-hole of the insulation plate 16 and through-hole 10b of the connecting plate 10a of the negative electrode lead 10 and secured to these members by caulking. The negative electrode terminal 11 is thereby electrically connected with the negative electrode current collector tab 6a through the negative electrode lead 10.

The battery shown in FIGS. 1 to 4 is produced, for example, by the following method. The electrode group 2 is produced and the obtained electrode group 2 is dried. Then, the positive and negative electrode leads 8 and 10 are welded to the positive and negative electrode current collector tabs 5a and 6a of the electrode group 2 respectively. Then, the electrode guards 12 are set to the positive and negative electrode current collector tabs 5a and 6a of the electrode group 2 to secure the electrode guards 12 to the electrode group 2 by the insulation tape 13. Then, the positive and negative electrode terminals 9 and 11, the seal plate 4, and the positive and negative electrode leads 8 and 10 are secured by caulking to integrate these members and then, the seal plate 4 is secured to the opening portion of the container 1 by welding. Then, an electrolytic solution is injected from the liquid injection port, after water left in the container 1 is removed from the liquid injection port of the seal plate 4. Then, the liquid injection port is sealed by the first seal lid 14 to perform first sealing.

The battery treated by the first sealing is subjected to processing including a charge. After the charge, the battery may be discharged or subjected to aging according to the need. The battery may be charged or discharged at two or more times. In the package member of the battery, remainder water which cannot be removed in the drying step exists. This water is electrolyzed in the initial charging, the charge performed after the initial charging, or the aging and therefore, gas is generated. This gas is removed in the gas releasing step which will be explained below.

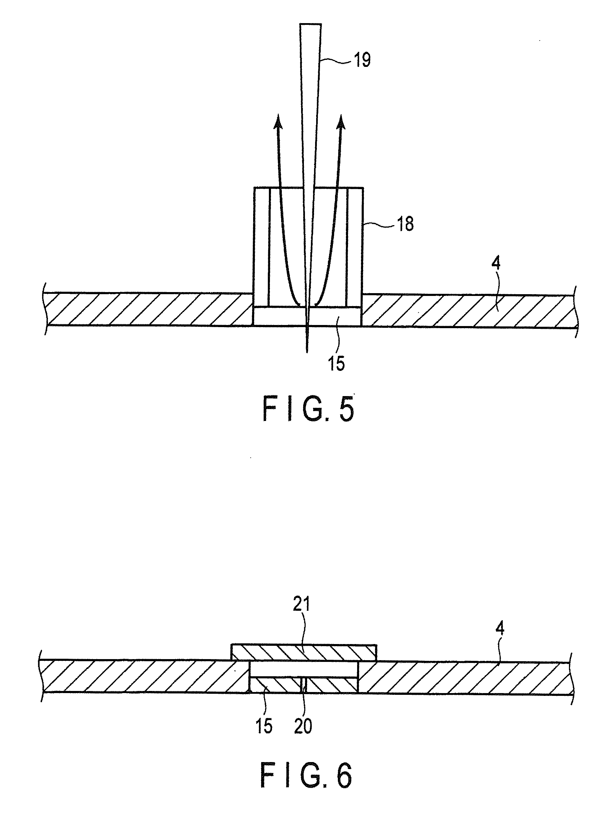

The gas discharge step is explained with reference to FIG. 5. As shown in FIG. 5, a bellows 18 is inserted into the recessed portion in the thin wall portion 15 and crimped. Then, the pressure of the bellows is made to be negative by suction. Then, an operating pin 19 having a sharp edge is inserted as a breaking member into the bellows 18 to break through the thin wall portion 15 by the operating pin 19, whereby gas in the package member 1 is released. This enables reduction in the swelling of the working battery. The released gas contains a nonaqueous electrolytic solution or the like. For this, a gas releasing atmosphere is desirably made to have negative pressure to prevent gas from dispersing in a wide range.

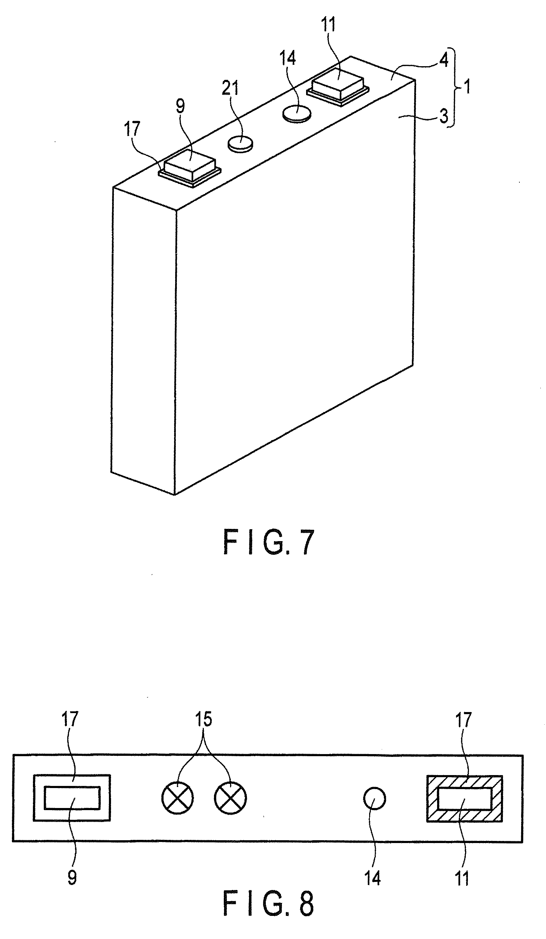

Then, the second sealing step is carried out. The second sealing step will be explained with reference to FIG. 6. An opening portion 20 formed by breaking through the thin wall portion 15 is in the seal plate 4. A circular second seal lid 21 is disposed on the surface of the seal plate 4 to cover the opening portion 20 with the second seal lid 21 and the second seal lid 21 is secured to the seal plate 4 by welding to thereby carry out second sealing. FIG. 7 shows a perspective view of the battery which has subjected to the second sealing. The second seal lid 21 is formed of a metal such as aluminum or an aluminum alloy.

After the second sealing step, a charge/discharge cycle operation may be carried out before the battery is delivered.

Although, in FIG. 4, one thin wall portion 15 for gas vent is formed, the number of thin wall portions 15 for gas vent may be two or more. An example is shown in FIG. 8. The number of gas venting operations may be two or more. Even in the case where water which enters into the battery in the production process is only insufficiently gasified in the first charge operation, the water is gasified in second or third charging of the battery to thereby enable gas venting.

Here, the following explanations are furnished as to the active material of the positive and negative electrodes, separator, nonaqueous electrolytic solution, container, seal plate and electrode guard.

Examples of the positive electrode active material may include, though not limited to, various oxides such as lithium-containing cobalt oxides (for example, LiCoO₂). manganese dioxide, lithium-manganese complex oxides (for example, LiMn₂O₄ and LiMnO₂), lithium-containing nickel oxides (for example, LiNiO₂), lithium-containing nickel-cobalt oxides (for example, LiNi_{0.8}Co_{0.2}O₂), lithium-containing iron oxides, lithium-containing vanadium oxides, and chalcogen compounds such as titanium disulfide and molybdenum disulfide.

Examples of the negative electrode active material may include, though not particularly limited to, graphitized materials or carbonaceous materials (for example, graphite, cokes, carbon fibers, spherical carbon, vapor phase thermal decomposition carbonaceous materials, and resin fired materials), chalcogen compounds (for example, titanium disulfide, molybdenum disulfide, and niobium selenide), light metals (for example, aluminum, aluminum alloys, magnesium alloys, lithium, and lithium alloys), and lithium-titanium oxides (for example, spinel type lithium titanate).

There is no particular limitation to the separator, and, for example, a microporous film, woven fabric, and nonwoven fabric, or a laminate of the same materials or different materials may be used. Examples of the material forming the separator may include a polyethylene, polypropylene, ethylene/propylene copolymer, ethylene/butene copolymer, and cellulose.

The nonaqueous electrolytic solution is prepared by dissolving an electrolyte (for example, lithium salts) in a nonaqueous solvent. Examples of the nonaqueous solvent may include ethylene carbonate (EC), propylene carbonate (PC), butylene carbonate (BC), dimethyl carbonate (DMC), diethyl carbonate (DEC), ethylmethyl carbonate (EMC), γ-butyrolactone (γ-BL), sulfolane, acetonitrile, 1,2-dimethoxyethane, 1,3-dimethoxypropane, dimethyl ether, tetrahydrofuran (THF), and 2-methyltetrahydrofuran. These nonaqueous solvents may be used either singly or in combinations of two or more. Examples of the electrolyte may include lithium salts such as lithium perchlorate (LiClO₄), lithium hexafluorophosphate (LiPF₆), lithium tetrafluoroborate (LiBF₄), lithium hexafluoroarsenic (LiAsF₆), and lithium trifluoromethanesulfonate (LiCF₃SO₃). These electrolytes may be used either singly or in combinations of two or more. The amount of the electrolyte to be dissolved in the nonaqueous solvent is preferably 0.2 mol/L to 3 mol/L. If the concentration of the electrolyte is too low, there is the case where sufficient ionic conductivity cannot be obtained. If the concentration of the electrolyte is too high, on the other hand, there is the case where the electrolyte cannot be completely dissolved in the electrolytic solution.

For example, aluminum, an aluminum alloy, iron (Fe), iron plated with nickel (Ni), or stainless (SUS) may be used as the material for the container and seal plate. When the positive and negative electrode terminals 9 and 11 are formed of aluminum or an aluminum alloy, aluminum or an aluminum alloy may be used as the positive and negative electrode leads 8 and 10.

Although any resin may be used as the resin used for the electrode guard insofar as it is a resin which is not adversely affected by the electrolytic solution, for example, a polyethylene, polypropylene, ethylene/vinyl acetate copolymer, ethylene/vinyl acetate/alcohol copolymer, ethylene/acrylate copolymer, ethylene/ethylacrylate copolymer, ethylene/methylacrylate copolymer, ethylene/methacrylate copolymer, ethylene/methyl methacrylate copolymer, ionomer, polyacrylonitrile, polyvinylidene chloride, polytetrafluoroethylene, polychlorotrifluoroethylene, polyphenylene ether, polyethylene terephthalate, or polytetrafluoroethylene may be used as the resin. The above resins may be used either singly or in combinations of two or more. Among these resins, a polypropylene or polyethylene is preferably used.

The method for producing a battery according to the embodiment explained above involves the releasing gas contained in the package member from a vent hole and sealing the vent hole after the processing including the charge. For this, even if remainder water which cannot be removed in the drying step exists, so that gas is generated in the initial charging, the charge performed after the initial charging, or the aging, a working battery can be reduced in swelling.
It is necessary to reduce the amount of water in the electrode group as much as possible to reduce the amount of gas to be generated in the processing including the charge. It is therefore necessary to raise the temperature in the drying step or to increase the drying time. However, if the drying temperature is raised and the drying is performed for a long time, this increases the possibility of deterioration of the electrode. According to the embodiment, even if the amount of water in the electrode group is large, so that the amount of gas to be generated in the processing including the charge is large, the swelling of the working battery can be reduced because the gas can be released in the gas releasing step. Therefore, because it is unnecessary to dry the electrode group in a severe condition, thermal deterioration of the electrode can be prevented, ensuring a long life.

Although several embodiments are explained, these embodiments are illustrative and should not be interpreted as restrictive. These novel embodiments can be practiced in other various forms and may be variously omitted, substituted or modified without departing from the spirit of the invention. These embodiments and modifications are embraced in the scope and spirit of the invention and also embraced in the invention described in the claim and equivalence of claims.

### Reference Signs List

1...Package member; 2...Electrode group; 3...Container; 4...Seal plate; 5...Positive electrode; 5a...Positive electrode current collector tab; 5b...Positive electrode active material-containing layer; 6...Negative electrode; 6a...Negative electrode current collector tab; 6b...Negative electrode active material-containing layer; 7...Separator; 9...Positive electrode terminal; 11...Negative electrode terminal; 12...Electrode guard; 13...Insulation tape; 14...First seal lid; 15...Thin wall portion; 16...Insulation plate; 17...Insulation gasket; 18...Bellows; 19...Operating pin; 21...Second seal lid

## Claims

1. A method for producing a battery, comprising:
injecting an electrolytic solution into a package member comprising an electrode through an injection port opened in the package member;
firstly sealing the injection port;
subjecting to processing comprising a charge;
opening a vent hole in the package member to release gas contained in the package member from the vent hole; and
secondly sealing the vent hole.

2. The method for producing a battery according to claim 1,
wherein the package member comprises a thin wall portion, and the thin wall portion is broken using a breaking member to open the vent hole in the package member.

3. The method for producing a battery according to claim 2,
wherein the opening of the vent hole is carried out in a negative pressure atmosphere.

4. The method for producing a battery according to claim 2,
wherein the breaking member comprises a needle edge.
